# EUROPEAN PATENT APPLICATION

(11) **EP 3 474 097 A1**
(43) Date of publication of application: **24.04.2019**
(21) Application number: 18193432.4
(22) Date of filing: 10.09.2018
(51) Int. Cl.: G05B 19/042, G05B 9/02

(54) **OUTPUT UNIT, INPUT UNIT AND INPUT-OUTPUT SYSTEM**

(30) Priority: 23.10.2017 JP 2017204546
(71) Applicant: OMRON CORPORATION, Kyoto-shi, Kyoto 600-8530 (JP)
(72) Inventor: HASHIMOTO, Minoru, Kyoto-shi, Kyoto 600-8530 (JP)
(74) Representative: Becker Kurig Straus

(57) **Abstract**

An output unit (30), an input unit (20) and an input-output system (100) are provided to construct a safety control logic having a high degree of freedom in design and has scalability. The output unit (30) includes an input signal receiving part (34), receiving an input signal from the input unit (20); and an output control part (30), performing an output based on the input signal. In each group set for the output unit (30), the output unit (30) performs the output when receiving the input signals from all the input units (20) set to the same group as the group set for the output unit (30).

## Description

### BACKGROUND

### Technical Field

The present invention relates to an output unit, an input unit, and an input-output system including the same.

### Related Art

In the FA (Factory Automation) field, in order to safely control the operations of industrial robot systems, general purpose machines, semiconductor manufacturing devices and the like, a safety controller (Safety PLC: Programmable Logic Controller) is used. The safety controller includes an input unit to which an on/off signal from a switch, a sensor and the like is input; an output unit which outputs a control signal to an actuator such as a servomotor, a hydraulic cylinder and a solenoid valve, and an equipment such as a relay; and a CPU unit which based on an input from the input unit executes an arithmetic processing according to a control program stored therein and controls the output unit.

In such a safety controller, for example, when a safety sensor such as a light curtain detects that someone enters the working area of the machines or devices, a detection signal from the safety sensor is inputted to the input unit. The CPU unit receives the input signal and controls the output unit in a manner that a drive stop signal for example is outputted to the actuators in operations based on a prescribed control program. In this way, the machines in operations are urgently stopped so that the safety of the worker is ensured.

However, a creation of the control program stored in the safety controller is extremely complicated work which needs some expertise. If the user has to create such a control program, a burden on the user will be excessive.

Therefore, in patent literature 1 (Specification of Japanese Patent No. 5254968 (registered on April 26, 2013)), a control device is described which can be set by the user selecting a desired safety control logic from multiple safety control logics by a setting switch.

### SUMMARY

However, the conventional technique described above can only select the desired safety control logic from the preset safety control logics, and has low degree of freedom in design. Besides, the conventional technique is also poor in expansibility . Accordingly, it may not be said that the user can easily construct the desired safety control logic.

One embodiment of the present invention is accomplished based on the above problem, and realizes an output unit and the like that can construct a safety control logic without burdening the user, and the safety control logic has a high degree of freedom in design and has scalability.

In order to solve the problem, an output unit according to one embodiment of the present invention is provided to be capable of communicating with multiple input units. More than one group is set for each of the output unit and each of the input units. The output unit includes an input signal receiving part which receives an input signal from the input unit; and an output control part which performs an output based on the input signals. In each group set for the output unit, the output control part performs the output when receiving the input signals from all the input units which are set in the same group as the group set for the output unit.

According to the above configuration, the output unit performs the output when receiving the input signals from all the input units included in the same group as the output unit. In this way, a logical conjunction (AND) logic can be constructed, that is, an output is performed when there is an input from all the input units set in the same group as the output unit.

Besides, when multiple groups are set for the output unit, the output unit performs an output when receiving the input signals from all the input units which are set in any one of the groups. Accordingly, when multiple groups are set for the output unit, a logical sum (OR) logic can be constructed, that is, an output is performed when there is an input from all the input units for which any one of the groups is set.

Therefore, various logics for an output can be easily constructed by a combination of the input unit and the output unit in each group. Accordingly, without burdening the user, a safety control logic can be constructed which has a high degree of freedom in design and has scalability.

In order to solve the problem, an input unit according to one embodiment of the present invention is provided to be capable of communicating with the above output unit and capable of group setting. In this way, the effect described above can be obtained.

In order to solve the problem, an input-output system according to one embodiment of the present invention includes the above output unit and the above input unit. In this way, the effect described above can be obtained.

According to one embodiment of the present invention, the following effect is obtained, that is, without burdening the user, a safety control logic can be constructed which has a high degree of freedom in design and has scalability.

### BRIEF DESCRIPTION OF THE DRAWINGS

FIG. 1 is a block diagram showing a configuration of major parts of an output unit of the embodiment.
FIG. 2 is a drawing showing one example of a machining center to which an input-output system of the embodiment is applied.
FIG. 3 is a block diagram showing a configuration example of the input-output system of the embodiment.
FIG. 4 shows four parts (A)∼(D) and the parts (A)∼(D) are drawings showing a relationship between each group of the input unit and the output unit and an output possibility of the output unit.
FIG. 5 is a drawing showing an example of a DIP switch that can be used in the embodiment.

### DESCRIPTION OF THE EMBODIMENTS

### §1 Application Example

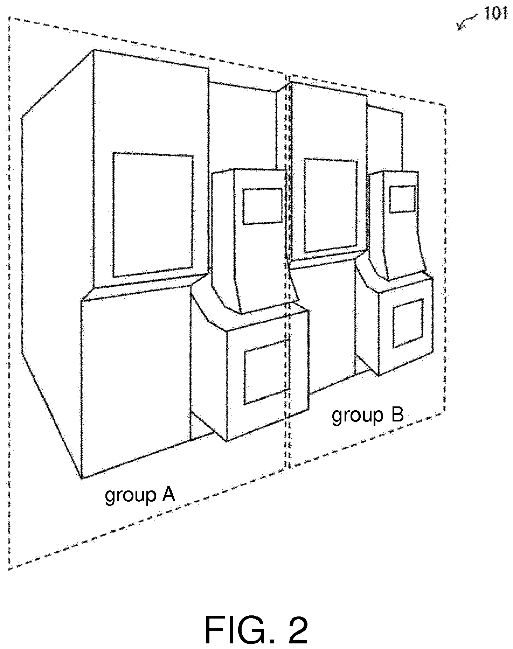

First, one example of a scene is illustrated in which the present invention is applied using FIG. 2. FIG. 2 shows one example of a machining center 101 to which an input-output system 100 of the embodiment is applied. As shown in FIG. 2, in the machining center 101 of the application example, control objects are divided into multiple groups (group A and group B in the example shown in FIG. 2), and each of the groups is controlled. In other words, output units and input units of a safety controller which is used in the machining center 101 are divided into groups. Then, in the embodiment, the output unit grasps all the input units included in the same group, and performs an output using a logical conjunction of inputs from the input units included in the same group.

In this way, since the output from the output unit can be performed in each group, the user can construct a desired safety control logic only by dividing the control objects into groups.

### §2 Configuration Example

### [Configuration]

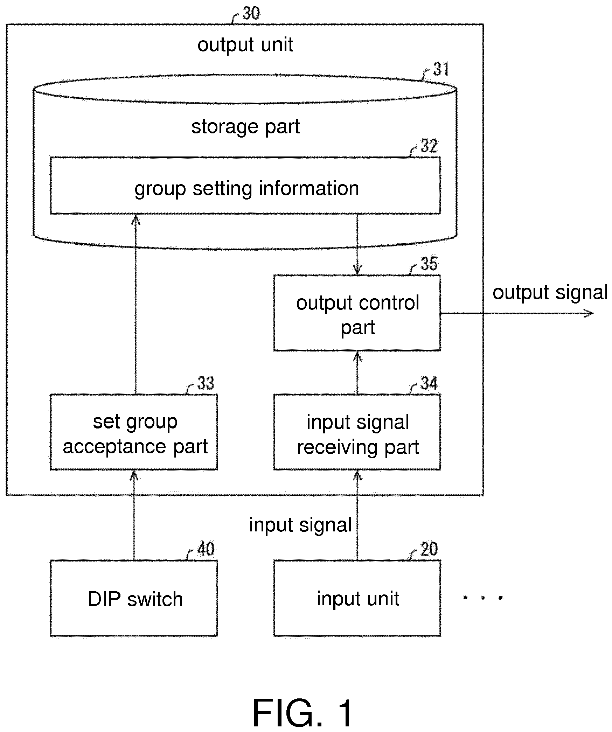

Next, a configuration of major parts of an output unit 30 of the embodiment is illustrated with reference to FIG. 1. FIG. 1 is a block diagram showing the configuration of the major parts of the output unit 30 of the embodiment.

As shown in FIG. 1, the output unit 30 includes a storage part 31, a set group acceptance part 33, an input signal receiving part 34, and an output control part 35. Besides, group setting information 32 is stored in the storage part 31.

The output unit 30 is capable of group setting, and performs an output based on the input signal from the input unit 20. The output is described below in detail. Furthermore, the output unit 30 may also function as an input unit. That is, the output unit 30 may be an input-output unit.

As described above, the group setting information 32 is stored in the storage part 31. The group setting information 32 includes information of the group set for the output unit 30, and information of the input unit 20 set to the same group as the output unit 30. The information of the input unit 20 set to the same group can be obtained, for example, at startup.

The set group acceptance part 33 accepts, for example, a group setting of the output unit 30 that is set by an external DIP switch 40ed, and is stored in the storage part 31 as the group setting information 32. A group setting method for each of the input unit 20 and the output unit 30 is described below in detail.

The input signal receiving part 34 receives the input signal from the input unit 20, and sends the input signal to the output control part 35.

The output control part 35 determines whether to output by using the input signal received by the input signal receiving part 34 and the group setting information 32, and when it is determined to output, the output is performed. More specifically, the output control part 35 performs the output in each group when receiving the input signals from all the input units 20 that are set to the same group as the output unit 30.

The input unit 20 is capable of group setting and communicating with the output unit 30. Then, the input unit 20 sends the input signal to the output unit 30 when an input device described below is detected.

### [Example of input-output system]

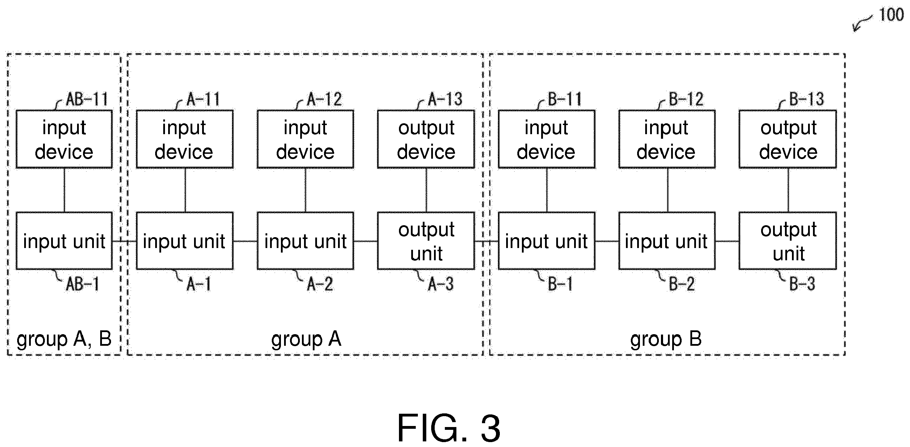

Next, a configuration example of the input-output system 100 of the embodiment is illustrated with reference to FIG. 3. FIG. 3 is a block diagram showing the configuration example of the input-output system 100 of the embodiment.

In the example shown in FIG. 3, an input unit AB-1, an input unit A-1, an input unit A-2, an input unit B-1, and an input unit B-2 are equivalent to the input unit 20. Furthermore, when it is not necessary to distinguish these input units, these input units are simply referred to the input unit. Besides, an output unit A-3 and an output unit B-3 are equivalent to the output unit 30. Furthermore, when it is not necessary to distinguish these output units, these output units are simply referred to the output unit.

In the example shown in FIG. 3, the input unit AB-1, the input unit A-1, the input unit A-2, the output unit A-3, the input unit B-1, the input unit B-2 and the output unit B-3 are connected in series. Besides, as shown in FIG. 3, an input device AB-11, an input device A-11, an input device A-12, an output device A-13, an input device B-11, an input device B-12, and an output device B-13 are respectively connected to each unit.

The input units and the output units can be set to groups. In the example shown in FIG. 3, the input unit AB-1 is set to both group A and group B. That is, the input unit AB-1 is included in both group A and group B. Besides, the input unit A-1 and the input unit A-2 are set to group A. Besides, the input unit B-1 and the input unit B-2 are set to group B.

The input device is to detect a state in safety applications. An example may be a laser scanner that senses the existence of people in a dangerous area, a safety mat, a safety light curtain that senses an incursion of people and the like. Besides, a safety switch which is referred to as an emergency stop or enable equipment can also be an example of the input device.

The output device is to control the safety of each equipment based on the output signal from the output unit. An example may be a safety controller, a servo driver and the like.

Then, the output unit of the embodiment grasps all the input units included in the same group as the output unit. According to the example in FIG. 3, the output unit A-3 grasps three input units, namely the input unit AB-1, the input unit A-1, and the input unit A-2. Besides, the output unit B-3 grasps three input units, namely the input unit AB-1, the input unit B-1, and input unit B-2.

As described above, when there is an input from the input unit included in the same group as the output unit, the output unit outputs based on a logical conjunction (AND). That is, when there are three input units, namely the input unit AB-1, the input unit A-1 and the input unit A-2 that are included in the same group as the output unit, the output begins to be performed as there are inputs from all the input units.

Besides, when the output unit is included in multiple groups, and there is an input from the input units included in different groups, the output unit outputs based on a logical sum (OR). That is, when the output unit is included in two groups, namely group A and group B, the input unit included in group A is one input unit A-1 and the input unit included in group B is one input unit B-1, the output is performed when there is an input from either the input unit A-1 or the input unit B-1.

Therefore, in a case of the example shown in FIG. 3, the output unit A-3 performs an output using the logical conjunction of the input from three units, namely the input unit AB-1, the input unit A-1 and the input unit A-2; the output unit B-3 performs an output using the logical conjunction of the input from three units, namely the input unit AB-1, the input unit B-1 and the input unit B-2.

### [output pattern]

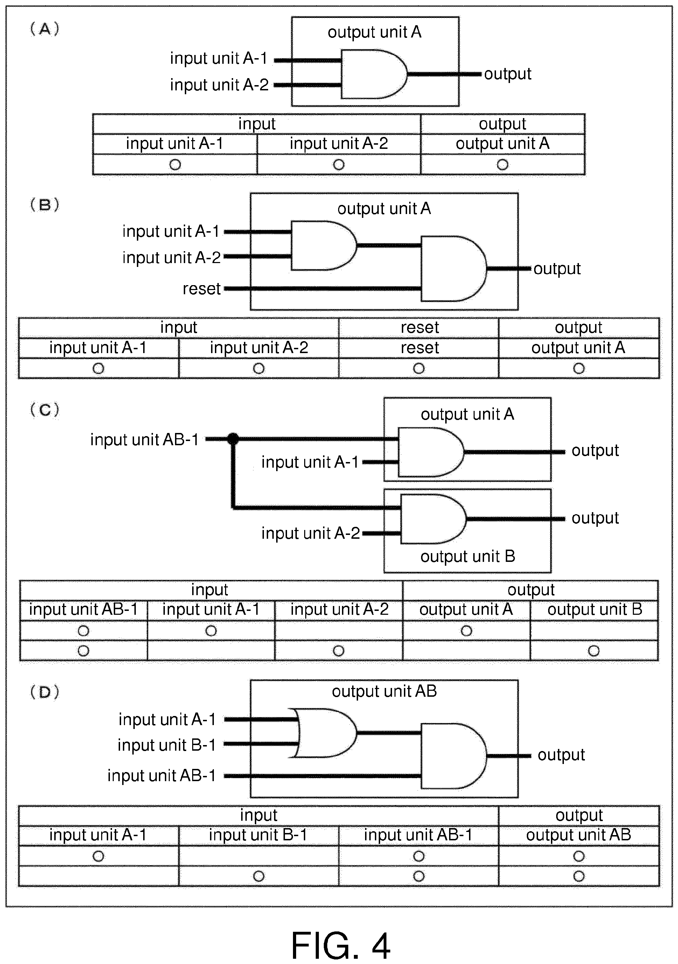

Next, an output of the output unit 30 is illustrated with reference to FIG. 4. FIG. 4 is a drawing showing a relationship between each group of the input unit 20 and the output unit 30 and an output possibility.

The part (A) in FIG. 4 shows a case that the output unit 30 is included in group A (referred to the output unit A in FIG. 4), and that the input units 20 included in group A have two units, namely the input unit A-1 and the input unit A-2. In this case, when there are inputs from each of the two input units, namely the input unit A-1 and the input unit A-2, the output unit A included in group A performs an output. That is, the output unit A performs the output using the logical conjunction of the inputs from the two input units, namely the input unit A-1 and the input unit A-2.

The part (B) in FIG. 4B shows a case that a configuration of using a reset signal is added to the example shown in FIG. 4A. In this state, as shown in part (B) of FIG. 4B, when there are inputs from each of the two input units, namely the input unit A-1 and the input unit A-2, and an input of the reset signal set in group A, the output unit A included in group A performs an output. That is, the output unit A performs the output using the logical conjunction of the reset signal and the logical conjunction of the inputs from two input units, namely the input unit A-1 and the input unit A-2.

The part (C) of FIG. 4 shows a state in which there is an output unit A included in group A and an output unit B included in group B, the input units included in group A are two units, namely the input unit AB-1 and input unit A-1, and the input units included in group B are two units, namely the input unit AB-1 and the input unit B-1. In this state, when there are inputs from each of the two input units, namely the input unit AB-1 and the input unit A-1, the output unit A included in group A performs an output. Besides, when there are inputs from each of the two input units, namely the input unit AB-1 and the input unit B-1, the output unit B included in group B performs an output. That is, the output unit A included in group A performs the output using the logical conjunction of the inputs from the two input units, namely the input unit AB-1 and the input unit A-1, and the output unit B included in group B performs the output using the logical conjunction of the inputs from two input units, namely the input unit AB-1 and the input unit B-1.

The part (D) of FIG. 4 shows a state in which there is an output unit AB included in both groups A and B, the input units included in group A are two units, namely the input unit AB-1 and the input unit A-1, the input units included in group B are two units, namely the input unit AB-1 and the input unit B-1. In this state, when there is an input from at least one of the input unit A-1 and the input unit B-1, and there is an input from the input unit AB-1, the output unit AB included in both groups A and B performs an output. That is, by using the logical conjunction of the input unit AB-1 and the logical sum of the inputs from the two input units, namely the input unit A-1 and the input unit B-1, the output unit AB included in both groups A and B performs the output.

As described above, in the embodiment, any logic can be constructed by dividing the input unit 20 and the output unit 30 into groups. Therefore, just by preparing necessary input-output units, setting the group and connecting the units, the user can intuitively construct any safety control logic. Accordingly, the user can easily construct the safety control logic without using a tool and the like. Besides, just because the input-output units are connected in different orders, the wiring can also be optimally realized in the scene. Furthermore, a tool and the like are not required so that the cost for a system construction can be suppressed.

### §3 Alternative Configuration Example

### [Alternative configuration example 1]

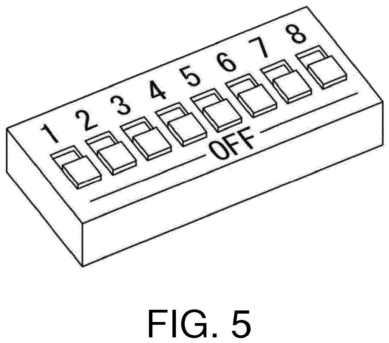

The group setting of the input unit and the output unit may be preset at the time of shipment from the factory, or may be configured to be customized using the DIP switch 40. An example of the DIP switch 40 is shown in FIG. 5. By sending the setting information from the DIP switch 40 shown in FIG. 5 to each unit, the group of each unit can be set. For example, when the switches 1, 2, 3 are turned on, the unit can be set to be included in the groups corresponding to the switches 1, 2, 3.

Besides, by arranging a device for the group setting equipped with the DIP switch 40 and copying a state of the DIP switch 40 to each input-output unit, the group of each input-output unit may be set. Accordingly, equipping the DIP switch 40 to each input-output unit can be unnecessary.

In other words, according to the configuration, the user can easily construct the safety control logic and change the group. Besides, as long as the DIP switch 40 is preset, the user may only select the input-output unit that the group has been set without setting the group. Furthermore, in this case, since the user who does not know the safety design cannot carelessly change the setting, the management of the quiet control system becomes easier.

### [Alternative configuration example 2]

The group setting of each input-output unit may be configured to be recognizable for the user. For example, the group setting may be configured so that the user is notified of the set group by indication means such as a LED (Light Emitting Diode), a display light and the like. Besides, when the group setting has been already completed at the time of shipment from the factory, the group set in the input-output unit may be configured to be printed, or the color or shape of the input-output unit is different in each set group. Accordingly, the group setting of the input-output unit can be recognized easily.

### [Alternative configuration example 3]

The group setting of the output unit may be set with an output reference. For example, when two output units are respectively set as group A and group B, and there is one input unit in group A and one input unit in both groups A and B, the output unit of group A does not output when there is no input from the two input units. Accordingly, the logic of logical conjunction (AND) can be realized, that is, the output is not performed when there is no input from the two input units.

In addition, when one output unit is set to both groups A and B and there is one input unit in group A and one input unit in group B, as long as there is an input from any one of the input units, the output unit executes an output. Accordingly, the logic of logical sum (OR) can be realized, that is, the output is executed as long as there is an input from any one of the two input units.

Therefore, the logics of logical conjunction (AND) and logical sum (OR) can be easily realized.

### [Alternative configuration example 4]

The input-output system may be configured so that in the process of connection recognition of each input-output unit, the user is informed, by an indicator and the like, of the portion where the communication does not reach. Accordingly, the user can identify a disconnection location.

### [Alternative configuration example 5]

The input-output system may be configured to have a meaning in a connection order of the input-output units that are connected in series. For example, it may be configured to divide groups before or after certain units. Besides, it may be configured so that the input-output units are connected in the connection order of a logic gate. Accordingly, the groups of the input-output unit are unnecessary to be set individually.

### [Description of the Symbols]

- 20: input unit
- 30: output unit
- 31: storage part
- 32: group setting information
- 33: set group acceptance part
- 34: input signal receiving part
- 35: output control part
- 40: DIP switch
- 100: input-output system
- A-1, A-2, AB-1, B-1, B-2: Input unit
- A-3, B-3: Output unit

## Claims

1. An output unit (30), capable of communicating with a plurality of input units (20), and more than one group is set for the output unit (30) and each of the input units (20), and the output unit (30) comprising:
an input signal receiving part (34), receiving an input signal from the input unit (20); and
an output control part (35), performing an output based on the input signal,
wherein in each group set for the output unit (30), the output control part (35) performs the output when receiving the input signals from all the input units (20) that are set to the same group as the group set for the output unit (30).

2. An input unit (20), capable of communicating with an output unit (30), and the input unit (20) being capable of group setting, and a value of an input from the input unit (20) and information of the group setting being transmitted to the output unit (30).

3. An input-output system (100), integrating and outputting information from a plurality of input units (20), the input-output system (100) comprising:
the plurality of the input units and an output unit,
wherein the plurality of the input units (20) transmits values of inputs from the plurality of the input units (20) and information of group setting to the output unit (30),
the output unit (30) receives the information transmitted from the plurality of the input units, and
the output unit (30) performs an output when receiving input signals from all the input units (20) that are set to the same group as a group set for the output unit.
